# FASCICULE DE BREVET EUROPEEN

(11) **EP 3 655 725 B1**
(45) Date de publication et mention de la délivrance du brevet: **26.02.2025**
(21) Numéro de dépôt: 18752591.0
(22) Date de dépôt: 19.07.2018
(51) Int. Cl.: G01C 21/16

(54) **PROCÉDÉ D'ESTIMATION DU MOUVEMENT D'UN OBJET ÉVOLUANT DANS UN ENVIRONNEMENT ET UN CHAMP MAGNÉTIQUE**
VERFAHREN ZUR SCHÄTZUNG DER BEWEGUNG EINES OBJEKTS, DAS SICH IN EINER UMGEBUNG UND IN EINEM MAGNETFELD BEWEGT
METHOD FOR ESTIMATING THE MOVEMENT OF AN OBJECT MOVING IN AN ENVIRONMENT AND IN A MAGNETIC FIELD

(30) Priorité: 21.07.2017 FR 1756986
(43) Date de publication de la demande: 27.05.2020
(73) Titulaire: SYSNAV, 27200 Vernon (FR)
(72) Inventeur: VISSIERE, David, 75009 Paris (FR); HILLION, Mathieu, 27200 Vernon (FR); CARUSO, David, 75008 Paris (FR)
(74) Mandataire: Regimbeau
(86) Numéro de dépôt international: PCT/FR2018/051836
(87) Numéro de publication internationale: WO 2019/016473

(56) Documents cités:
- EP-A1- 2 541 199
- CN-A- 106 709 222
- US-A1- 2017 074 660
- US-B1- 8 065 074
- US-B1- 8 761 439

## Description

### DOMAINE TECHNIQUE GENERAL

La présente invention concerne le domaine de la navigation sans GPS. Plus précisément, elle concerne un procédé d'estimation du mouvement d'un objet par des techniques magnéto-visio-inertielles.

### ETAT DE L'ART

Les techniques dites de navigation visio-inertielle, ou VINS (« vision-aided inertial navigation system ») permettent d'estimer précisément la vitesse (et de là la position par intégration) d'un solide dans un environnement considéré statique.

Par exemple, le document US 8 761 439 B1 décrit un procédé de détermination de la pose d'un solide en temps réel, notamment pour des applications de réalité augmentée, en combinant des données inertielles, des données magnétiques et des données visuelles.

Précisément, en complément des équations déjà utilisées en techniques inertielles classiques, on compare des images successivement acquises de l'environnement pour estimer le vecteur vitesse (linéaire) V, à partir du vecteur vitesse angulaire *Ω* (généralement mesuré par des gyromètres de la centrale inertielle). On peut également acquérir depuis l'environnement statique des images du solide pour le même résultat.

Grâce à cette information sur la vitesse du solide, l'erreur sur l'estimation de position sera dans le pire des cas proportionnelle au temps, contrairement aux techniques inertielles classiques où elle est quadratique en temps.

Ces techniques visio-inertielles apportent ainsi satisfaction, et requièrent des capteurs inertiels de moindre performance que les méthodes inertielles classiques (basées sur l'intégration au travers d'un filtre de Kalman ou d'un autre observateur d'informations en provenance de gyromètres et d'accéléromètres embarqués sur le solide dont on souhaite estimer la position et la vitesse : typiquement, les gyromètres « maintiennent » un repère, dans lequel une double intégration temporelle des mesures des accéléromètres permet d'estimer le mouvement) et donc moins encombrants.

Ainsi, au moins une centrale inertielle est couplée à au moins une caméra solidaire de la centrale inertielle. Les données issues de ces capteurs sont transmises à une carte électronique d'acquisition et de calcul qui délivre à l'utilisateur l'information de position et de vitesse par résolution du système d'équations.

Cependant, on constate aujourd'hui que les VINS souffrent de deux défauts :
- ils ont une consommation électrique élevée. En effet, alors que la consommation de capteurs inertiels standard de type MEMS est dérisoire, il a été montré que celle d'une caméra et surtout celle des processeurs nécessaires pour traiter les images est quasiment deux ordres de grandeur supérieure (voir le document « Visual-Inertial Odometry on Chip: An Algorithm-and-Hardware Co-design Approach ». Zhengdong Zhang, Amr Suleiman, Luca Carlone, Vivienne Sze, Sertac Karaman, 2017). Il est ainsi reconnu qu'il faut environ 10 Watts de puissance pour faire fonctionner le système sur une architecture CPU, ce qui est problématique si le système est alimenté sur batterie.
- ils ont besoin d'images facilement différentiables de l'environnement, ce qui fait qu'ils sont souvent utilisés dans les drones qui sont généralement équipés en standard d'une caméra et évoluent dans un environnement extérieur (dit « outdoor », typiquement naturel ou urbain) qui présente des paysages éclairés et variés, mais ils peuvent devenir quasiment inopérants en environnement intérieur (dit « indoor »), dans lequel on rencontre des situations tels qu'un tunnel sombre ou une pièce aux murs présentant peu de texture. De plus la réaction du système confronté à une telle situation est d'augmenter le gain de la caméra, ce qui augmente le bruit dans l'image. Alternativement on peut prévoir une caméra de meilleure qualité (plus sensible à la lumière), qui en plus d'être nettement plus encombrante (taille capteur et lentille), consomme plus qu'une caméra bas de gamme. Similairement, dans le cas de systèmes où la caméra est fixe dans l'environnement, on peut avoir un obstacle qui vient cacher le solide cible.

En outre, ces systèmes reposent, à diverses degrés, sur l'hypothèse d'un champ de vue intersectant majoritairement une partie statique du monde, ce qui peut être temporairement faux si la scène est dynamique. S'il l'on peut trouver des méthodes purement vision pour segmenter les zones statiques de celle dynamique dans l'image, celle-ci, gourmande en calcul, tendent également vers une augmentation de la consommation.

Pour résoudre le problème de la consommation, il est possible de changer le support matériel, notamment en effectuant les calculs lourds sur un FPGA ou en fondant un ASIC voire un processeur spécialisé (voir par exemple le « HPU » de Microsoft), ce qui reste très couteux.

Alternativement, il a été proposé de trouver un compromis entre performance et consommation, par exemple en réduisant la résolution de l'image acquise, sa qualité (utilisation d'une caméra monochrome) ou la fréquence d'acquisition. Une telle solution dégrade encore les performances dans les cas problématiques cités plus hauts.

Il serait souhaitable de disposer d'une nouvelle méthode de navigation visio-inertielle qui diminue sensiblement la consommation électrique, tout en améliorant les performances, en particulier en environnement difficile tel que l'indoor.

### PRESENTATION DE L'INVENTION

La présente invention se rapporte ainsi selon une première variante d'un premier aspect à un procédé d'estimation du mouvement d'un objet évoluant dans un environnement et un champ magnétique ambiant selon la revendication 1 annexée.

La présente invention se rapporte selon une deuxième variante du premier aspect à un procédé d'estimation du mouvement d'un objet évoluant dans un environnement et un champ magnétique ambiant selon la revendication 2 annexée.

D'autres caractéristiques avantageuses sont fournies dans les revendications 3 à 8 annexées.

Selon un deuxième aspect, l'invention concerne un équipement d'estimation du mouvement d'un objet évoluant un environnement et un champ magnétique ambiant selon la revendication 9 annexée.

Selon d'autres caractéristiques avantageuses et non limitatives :
- L'équipement est un boitier comprenant les moyens de mesure magnétique et/ou les moyens de mesure inertielle et/ou les moyens d'acquisition optique ;
- L'équipement est un terminal mobile ou un serveur, adapté pour communiquer avec les moyens de mesure magnétique, les moyens de mesure inertielle et les moyens d'acquisition optique.

Selon un troisième aspect, l'invention concerne un système comprenant l'équipement selon le deuxième aspect de l'invention et les moyens de mesure magnétique, les moyens de mesure inertielle et les moyens d'acquisition optique en connexion.

Selon un quatrième et un cinquième aspect, l'invention concerne un produit programme d'ordinateur comprenant des instructions de code pour l'exécution d'un procédé d'estimation du mouvement d'un objet évoluant dans un champ magnétique ambiant selon le premier aspect de l'invention ; et un moyen de stockage lisible par un équipement informatique sur lequel un produit programme d'ordinateur comprend des instructions de code pour l'exécution d'un procédé d'estimation du mouvement d'un objet évoluant dans un environnement et un champ magnétique ambiant selon le premier aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- les figures 1 est un schéma d'équipements pour la mise en œuvre d'une variante du procédé selon l'invention ;
- La figure 2 représente plus en détail un exemple de boitier pour la mise en œuvre du procédé selon l'invention selon une autre variante
- La figure 3 représente plus en détail un exemple de boitier pour la mise en œuvre du procédé selon l'invention selon la première variante.

### DESCRIPTION DETAILLEE

### Principe

La présente invention propose d'ajouter au VINS des magnétomètres de sorte à mettre en œuvre des techniques supplémentaires de navigation magnéto-inertielles. Plus précisément, on utilise un système « visio-magnéto-inertiel » dit V-MINS, qu'on peut voir comme un système à la fois « visio-inertiel » et « magnéto-inertiel ». On rappelle que la navigation magnéto-inertielle est bien connue, voir le document FR2914739.

Il peut sembler contre-intuitif de chercher à réduire la consommation électrique du système, non pas en retirant, mais en ajoutant des capteurs, mais il s'avère que l'aspect vision et l'aspect magnétique sont parfaitement complémentaires et que leur utilisation conjointe est plus économe qu'en utilisant l'aspect vision seul.

Plus précisément, l'aspect vision et l'aspect magnétique sont efficaces dans des environnements opposés : alors qu'en indoor la vision a plus de chances d'être défaillante, la magnétométrie est parfaitement adaptée. Au contraire, en environnement outdoor, alors que l'absence de gradient magnétique peuvent gêner la navigation purement magnéto-inertielle, la vision est parfaitement adaptée.

Diverses façons d'exploiter au mieux ces données seront décrites par la suite, mais on comprendra qu'avant tout, l'ajout de magnétomètres dans un système VINS fournit des informations permettant de faire du « dead-reckoning » (ou navigation à l'estime) de manière autonome, ce que ne permet pas la centrale inertielle seule.

En effet, dans les systèmes VINS classiques, les données vision sont utilisées pour corriger les données inertielles, i.e. faire du recalage. On comprend donc que si la caméra est éteinte (par exemple parce que l'on est dans une zone sombre et qu'il n'y a plus d'intérêt à acquérir des images et donc qu'il vaut mieux éteindre la caméra pour économiser l'énergie) il n'y a plus de recalage.

Dans le présent système V-MINS, il reste possible de faire du recalage même lorsque la caméra est éteinte, grâce aux données magnétométriques.

Cela permet donc de réduire la fréquence nécessaire de recalage basé caméra pour un même niveau de performance, voire de se passer sur un certain intervalle de temps (dans les domaines de fonctionnement de la navigation magnéto-inertielle) de la caméra ainsi que des traitements lourds associés.

### Architecture

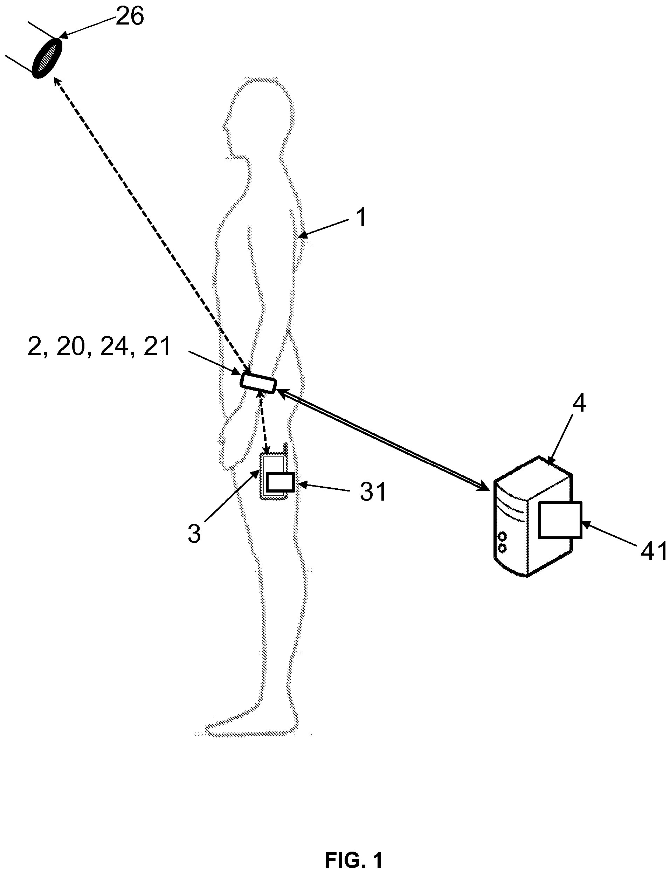

En référence à la **figure 1****,** le présent procédé permet l'estimation du mouvement d'un objet 1 évoluant dans un environnement Σ et un champ magnétique ambiant (typiquement le champ magnétique terrestre, le cas échéant légèrement altéré par les objets métalliques ou des courants électriques à proximité), noté *̅B̅*̅. Le champ magnétique est un champ vectoriel en l'espèce tridimensionnel, c'est-à-dire associant un vecteur de dimension trois à chaque point de tridimensionnel dans lequel l'objet est mobile.

Cet objet 1 peut être n'importe quel objet mobile dont la connaissance de la position est souhaitée, par exemple un véhicule à roues, un drone, etc., mais également une personne ou une partie du corps de cette personne (ses mains, sa tête, etc.).

L'objet 1 est équipé de moyens de mesure magnétique 20, qui sont des magnétomètres et/ou des gradiomètres. Plus précisément, au lieu de mesurer la valeur des composantes du champ magnétique *̅B̅*̅ ces derniers mesurent directement la valeur des composantes du gradient du champ magnétique *̅B̅*̅, i.e. la valeur des dérivées spatiales. De tels gradiomètres magnétiques 20 sont connus de l'homme du métier. Selon certains modes de réalisation de l'invention, on pourra utiliser des gradiomètres mesurant directement la valeur des dérivées secondes (gradient d'ordre deux), et de façon générale des dérivées i-ièmes (gradient d'ordre i).

Dans la suite de la description on prendra l'exemple de magnétomètres mais l'homme du métier saura transposer à des gradiomètres.

Le ou les magnétomètres 20 sont « axiaux », c'est à dire capables de mesurer une composante dudit champ magnétique, i.e. la projection dudit vecteur champ magnétique *̅B̅*̅ selon leur axe (ou en cas de gradiomètre une composante d'une dérivée spatiale d'ordre *i* dudit champ magnétique, i.e. la variation d'une composante de ∇^{*i-*1}*B* au niveau dudit gradiomètre selon leur axe).

Avantageusement les magnétomètres 20 sont au moins au nombre de 3n+3, avantageusement organisé par groupes de trois en « triaxes », i.e. un triplet de magnétomètres 20 deux à deux orthogonaux associés à la même position spatiale et mesurant le champ magnétique selon les trois axes.

De façon préférée, le repère orthonormé associé à l'objet est choisi par convention (et par facilité pour la suite de la présente description) tel que les triaxes sont avantageusement orientés conformément audit repère orthonormé, de sorte à faciliter encore les calculs.

Mais l'homme du métier saura dans tous les cas transposer à n'importe quelle disposition spatiale de gradiomètres/magnétomètres.

L'objet 1 est également équipé de moyens de mesure inertielle 24. De tels moyens sont largement connus de l'homme du métier et constituent typiquement une centrale à inertie comprenant au moins un accéléromètre et/ou un gyromètre, de façon préférée trois accéléromètres et trois gyromètres, également disposés en triaxe. Les gyromètres mesurent la vitesse angulaire instantanée de la centrale inertielle par rapport au référentiel terrestre, notée Ω̅. Les accéléromètres sont sensibles aux forces extérieures autres que gravitationnelles appliquées sur le capteur, et permettent de mesurer une accélération notée γ̅.

Les moyens de mesure inertielle et magnétique 20, 24 sont solidaires de l'objet 1, i.e. ils présentent un mouvement sensiblement identique dans le référentiel terrestre. De façon préférée, le référentiel de l'objet 1 est muni d'un repère cartésien orthonormé dans lequel les coordonnées sont notées (*x*₁*, x*₂*, x*₃), les magnétomètres 20 présentent ainsi une position prédéterminée dans ce repère.

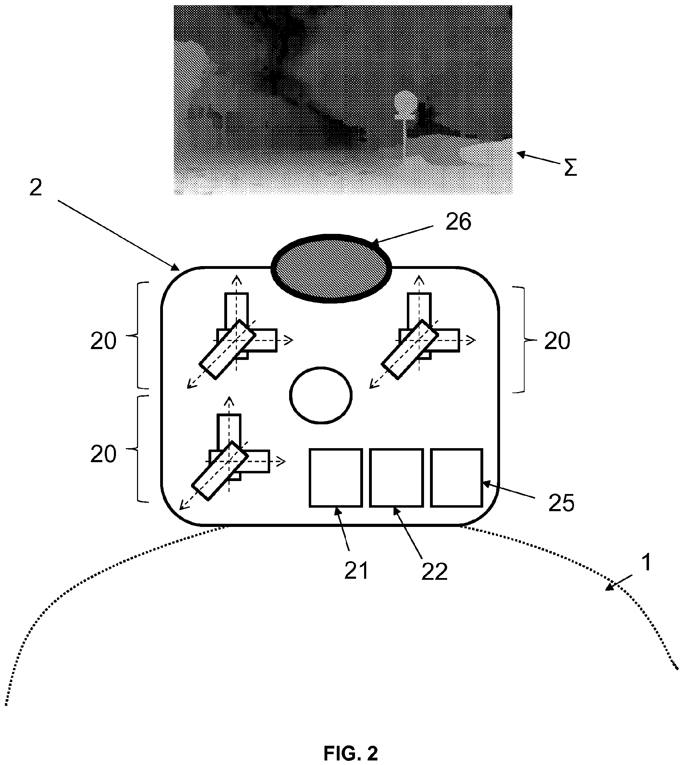

Le système pour la mise en œuvre du procédé comprend au moins des moyens d'acquisition optique 26. Dans un mode de réalisation principal de l'invention représenté sur la **figure 2** (qui sera pris à titre d'exemple dans la suite de la présente description), les moyens d'acquisition optique 26 sont eux aussi solidaires de l'objet 1 (en d'autres termes ils ont le même mouvement) et observent l'environnement Σ. Pour faciliter la compréhension du présent procédé, on réduira l'ensemble formé par l'objet 1 et les moyens d'acquisition optique 26 à un point, situé au niveau du centre optique des moyens d'acquisition optique 26. Ces moyens d'acquisition optique 26 peuvent être de nature variée mais consistent préférentiellement en une ou plusieurs caméras et avantageusement une unique caméra pour limiter la consommation électrique. La ou les caméras peuvent être de profondeur, mais de façon préférée on utilisera une caméra classique restituant une image visible de l'environnement et non une image de profondeur, et en particulier une simple caméra CCD ou CMOS (couleur ou noir et blanc) qui est suffisante, moins encombrante et moins consommatrice d'énergie.

Dans le mode de réalisation alternatif (qui sera décrit plus spécifiquement plus loin) et correspond à la figure 1, les moyens d'acquisition optique 26 sont fixes par rapport à l'environnement Σ et observent l'objet 1. On comprendra que le premier mode de réalisation (moyens d'acquisition optique 26 embarqués) est préféré, car il permet l'estimation continue du mouvement de l'objet 1, y compris s'il se déplace sur de longues distances. Dans le second mode, on est limité au champ de vision des moyens d'acquisition optique 2, mais cela est parfaitement adapté si l'on suit le mouvement de parties du corps d'un utilisateur par exemple.

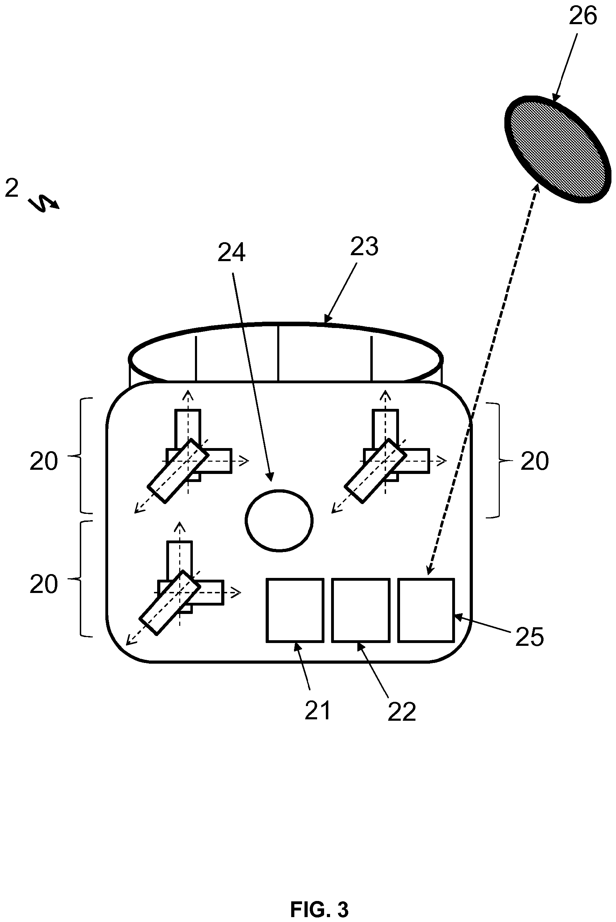

En référence à la figure 2, les moyens de mesure inertielle et magnétique 20, 24, et le cas échéant les moyens d'acquisition optique 26, sont préférentiellement ceux d'un boitier 2 présentant des moyens 23 d'attache à l'objet 1. Ces moyens d'attache 23 consistent par exemple si l'objet 1 est une personne en un bracelet par exemple à bande autoagrippante qui enserre le membre (par exemple le poignet, la main ou la tête) et permet la liaison solidaire, voir l'exemple de la **figure 3****.** On comprendra bien que l'invention n'est pas limitée à l'estimation du mouvement d'une personne, mais elle est particulièrement avantageuse dans une telle utilisation car elle permet un encombrement très réduit, ce qui est nécessaire pour que le boitier soit portable par un humain de façon ergonomique.

Le boitier 2 peut comprendre des moyens de traitement 21 (typiquement un processeur) pour la mise en œuvre directement en temps réel des traitements du présent procédé, ou bien les mesures peuvent être émises via des moyens de communication 25 vers un dispositif externe tel qu'un terminal mobile (smartphone) 3, voire un serveur distant 4, ou encore les mesures peuvent être enregistrées dans des moyens de stockage de données 22 locaux (une mémoire par exemple de type flash) mémoire locale pour un traitement a posteriori par exemple sur le serveur 4.

Les moyens de communication 25 peuvent mettre en œuvre une communication sans fil à courte portée par exemple Bluetooth ou Wifi (en particulier dans un mode de réalisation avec un terminal mobile 3) voire être des moyens de connexion à un réseau mobile (typiquement UMTS/LTE) pour une communication à longue distance. Il est à noter que les moyens de communication 25 peuvent être par exemple une connectique filaire (typiquement USB) pour transférer les données des moyens de stockage de données 22 locaux à ceux d'un terminal mobile 3 ou d'un serveur 4.

Si c'est un terminal mobile 3 (respectivement un serveur 4) qui héberge « l'intelligence », il comprend des moyens de traitement 31 (respectivement 41) tels qu'un processeur pour la mise en œuvre des traitements du présent procédé qui vont être décrits. Lorsque les moyens de traitement utilisés sont ceux 21 du boitier 2, celui-ci peut encore inclure des moyens de communication 25 pour transmettre la position estimée. Par exemple la position du porteur peut être envoyée au terminal mobile 3 pour afficher la position dans une interface d'un logiciel de navigation.

Dans la suite de la présente description, on verra que les moyens de traitement de données 21, 31, 41 respectivement du boitier 2, d'un smartphone 3 et d'un serveur distant 4 peuvent indifféremment et selon les applications réaliser tout ou partie des étapes du procédé.

### Procédé

Dans une première étape (a), le procédé comprend l'acquisition (en particulier dans un référentiel de l'objet 1) de jusqu'à trois types de données :
- par les moyens de mesure inertielle 24 solidaires dudit objet 1, d'au moins une composante :
   o de l'accélération et/ou
   o de la vitesse angulaire de l'objet 1 (préférentiellement trois composantes de la vitesse angulaire, et trois composantes de l'accélération).
- par les moyens de mesure magnétique 20 (le ou les gradiomètres/magnétomètres) solidaires dudit objet 1, d'une composante :
   o du champ magnétique et/ou
   o d'au moins une dérivée i-ième dudit champ magnétique *̅B̅*̅, avec une ou plusieurs valeurs *i* > 1 (comme expliqué, divers gradiomètres/magnétomètres peuvent être utilisés de sorte à mesurer divers ordres des dérivées ou directement les valeurs du champ magnétique).
- par les moyens d'acquisition optique 26, soit :
   o S'ils sont solidaires de l'objet 1, d'images consécutives de l'environnement Σ ;
   o S'ils sont solidaires de l'environnement Σ de l'objet 1, d'images consécutives de l'objet 1.

Par commodité, dans la suite de la présente description on nommera « donnée inertielle » la ou les composantes de l'accélération et/ou de la vitesse angulaire de l'objet 1 acquises par les moyens de mesure inertielle 24 ; « donnée magnétique » la ou les composantes du champ magnétique et/ou d'au moins une dérivée i-ième dudit champ magnétique *̅B̅*̅ acquises par les moyens de mesure magnétique 20 ; et « donnée de vision » les images acquises par les moyens d'acquisition optique 26.

Ces données sont avantageusement acquises avec un échantillonnage dt (i.e. toutes les « dt » secondes) avec dt très petit devant le temps caractéristique des mouvements de l'objet 1, typiquement 40 ms.

Comme l'on verra plus loin, chacune de ces grandeurs n'est pas forcément mesurée à chaque pas de temps. Plus précisément, à chaque instant les moyens de mesure magnétique 20 et/ou les moyens d'acquisition optique 26 peuvent être éteints de sorte à n'acquérir en permanence que deux types de données sur trois, voire seulement un : les données inertielles et, préférentiellement, les données magnétiques ou les données de vision. On note qu'il est déjà connu dans les systèmes VINS d'acquérir les images à une fréquence inférieure aux données inertielles pour limiter la consommation, mais cette fréquence reste relativement élevée sous peine d'avoir une dérive importante.

Dans une étape (b), les moyens de traitement de données 21, 31, 41 estiment au moins une composante du mouvement de l'objet 1, en particulier toutes les composantes de la vitesse linéaire V. Une ou plusieurs composantes du vecteur vitesse angulaire Ω peuvent être également estimées ou du tout du moins vérifiées. Cette estimation est faite en utilisant la donnée inertielle, ainsi que la donnée magnétique et/ou la donnée de vision. En d'autres termes, l'ensemble de données utilisé peut varier dynamiquement : soit inertiel + magnétique, soit inertiel + vision, soit inertiel + magnétique + vision.

Différentes façons d'estimer le mouvement de l'objet à partir de ces données seront décrites plus loin.

### Sélection des données

On note que l'étape (a) comprend toujours l'acquisition continue des données inertielles, mais l'acquisition éventuellement seulement par intermittence des données magnétiques ou des données de vision. L'étape (a) peut toutefois alternativement comprendre l'acquisition continue des trois types de données, mais pas forcément leur prise en compte tout le temps : on rappelle que la majorité de la consommation énergétique est due aux traitements lourds associés.

A ce titre, l'étape (a) comprend avantageusement la sélection de la donnée magnétique et/ou de la donnée de vision. Comme expliqué, il n'est en effet généralement pas nécessaire de disposer simultanément de deux données dans la mesure où il y en a toujours une des deux qui est valide (et le plus souvent les deux) : en outdoor, au moins la donnée de vision sera fiable, et en indoor au moins la donnée magnétique sera fiable.

A ce titre, la sélection de la donnée magnétique et/ou de la donnée de vision est avantageusement la conséquence d'un test de la validité de la donnée magnétique et/ou de la donnée de vision.

Il peut par exemple être décidé que l'un de ces types de données est le type par défaut (l'autre étant désignée donnée de recalage), et c'est ce type dont la validité est vérifiée. On suppose en effet astucieusement que si la donnée par défaut n'est pas valide, alors l'autre donnée l'est. On peut prévoir que lorsque la donnée par défaut n'est pas fiable, on sélectionne soit la donnée de recalage, soit les deux données.

Par exemple, selon un premier exemple (cas de la figure 2) l'objet 1 est un drone évoluant en extérieur. Il est connu que le traitement de données de vision donnera toujours de bon résultat en recalage des données inertielles, mais qu'un tel traitement des données de vision sera couteux en énergie. Or économiser l'énergie et crucial pour un drone, qui fonctionne sur batteries et n'a qu'une autonomie limitée. On peut alors définir que le type de données par défaut est le type magnétique, c'est-à-dire qu'en situation normale la donnée magnétique est sélectionnée et utilisée, mais pas la donnée de vision (puisque la consommation énergétique des magnétomètres est largement inférieure à celle de la caméra). Si le test de validité n'est pas concluant pour la donnée magnétique (typiquement en cas de perturbation magnétique), alors on sélectionne à la place la donnée de vision pour accomplir un recalage.

Selon un deuxième exemple (cas de la figure 1) l'objet 1 est un casque de réalité virtuelle, avec les moyens d'acquisition optique 26 observant le casque et non solidaires de ce dernier. Dans la mesure où les moyens 26 ne sont pas montés sur l'objet 1, leur consommation électrique est moins problématique, c'est pourquoi on peut alors définir que le type de données par défaut est le type vision, c'est-à-dire qu'en situation normale la donnée de vision est sélectionnée et utilisée, mais pas la donnée magnétique. Si le test de validité n'est pas concluant pour la donnée de vision (typiquement si les mains de l'utilisateur cachent l'objet 1), alors on sélectionne à la place la donnée magnétique pour accomplir un recalage.

Divers tests de validité pourront être mis en œuvre, et éventuellement combinés. On pourra vérifier de façon indifférenciée (i.e. aussi bien pour tester la validité de la donnée magnétique que la donnée de vision) une qualité de la trajectoire en estimant par exemple une incertitude de dérive, notamment sous la forme d'un cône. Si la largeur de ce cône est au-delà d'un seuil, c'est que la donnée par défaut n'est pas fiable.

Plus spécifiquement pour la donnée de vision, on pourra par exemple :
- Vérifier que les images présentent au moins un nombre minimal prédéterminé de points d'intérêt ;
- Vérifier que l'intensité lumineuse est au-delà d'un seuil ;
- Vérifier que le contraste dans l'image est suffisant ;
- etc.

Plus spécifiquement pour la donnée magnétique, on pourra par exemple :
- Evaluer la stationnarité du champ magnétique (voir la demande FR1756958) ;
- Vérifier la non-uniformité du gradient.
- Etc.

On notera par ailleurs qu'il n'y a pas nécessairement d'évaluation de la validité pour la sélection, et qu'au moins à certains moments peuvent être sélectionnées par défaut à la fois la donnée magnétique et la donnée de vision indépendamment de la validité des données, par exemple à l'initialisation du procédé, ou lorsque la qualité de la cartographie décline (voir plus loin), ou tout simplement au bout d'une certaine durée.

Ainsi, un critère de distance temporelle inter-image peut par exemple pris en compte pour vérifier a minima la dérive de la navigation basée sur les donnée inertielle et magnétique, grâce aux informations images, et corriger seulement si nécessaire.

Si la précision est le premier critère de l'application, il est également possible d'utiliser les deux mesures par défaut, et de vérifier périodiquement la cohérence des deux mesures entre-elle. Les tests de validités n'étant alors effectués seulement en cas d'incohérence, pour désactiver temporairement un capteur.

### Estimation du mouvement

Comme expliqué, dans une étape (b), les moyens de traitement de données 21, 31, 41 estiment au moins une composante du mouvement de l'objet 1, en particulier toutes les composantes de la vitesse linéaire V et/ou de vitesse angulaire Ω, en utilisant la donnée inertielle et la donnée magnétique.

De nombreuses techniques sont connues pour estimer une ou plusieurs composantes du mouvement soit en utilisant la donnée inertielle et la donnée magnétique, soit en utilisant la donnée inertielle et la donnée de vision, y compris des techniques utilisant la donnée inertielle en permanence et la donnée de vision par intermittence.

Ainsi, l'étape (b) peut tout simplement mettre en œuvre un algorithme de navigation magnéto-inertielle et un algorithme de navigation visio-inertiel, et d'utiliser l'un ou l'autre selon la donnée sélectionnée.

Alternativement, il est simple et efficace d'utiliser des techniques connues de navigation visio-inertielles et d'ajouter la prise en compte de la donnée magnétique.

Par exemple sont connues des méthodes de filtrage visio-inertielles, en particulier de type « inverse square root ». Dans ces méthodes de filtrage, l'état est composé de l'attitude de l'objet ainsi que l'attitude d'un ensemble « d'images-clés », et on utilise un modèle d'évolution du filtre basé sur des équations inertielles. Il suffit d'ajouter dans ce filtre au moins une équation magnétique, telle que *Ḃ* = -Ω ∧ *B* + ∇*B. V,* pour rendre le filtre magnéto-visio-inertiel.

En l'absence de la donnée magnétique (si seule la donnée de vision est sélectionnée), la contribution de la ou les équations magnétiques peut être supprimée. Et en l'absence de la donnée de vision (si seule la donnée magnétique est sélectionnée), le filtre continuera à fonctionner sans problème.

De façon générale, l'étape (b) comprend de façon préférée une première sous-étape (b1) de construction d'éléments de cartographie de l'environnement en utilisant la donnée inertielle ainsi que la donnée magnétique et/ou la donnée de vision, et une deuxième sous-étape (b2) d'estimation de l'au moins une composante du mouvement de l'objet 1 à partir desdits éléments de cartographie (en localisant l'objet 1).

Les éléments de cartographie sont soit la carte complète, soit juste des points de repère appelés « amers », fixes et identifiables dans l'environnement (à l'instar des phares en navigation maritime).

A noter que ces deux étapes ne sont pas forcément distinctes et peuvent être réalisées simultanément. Dans le cas où l'on cartographie l'environnement, cette technique est connue par l'homme du métier sous le nom de SLAM (« simultaneous localization and mapping »).

Dans le cas où il n'y a pas de cartographie intermédiaire complète mais seulement la détermination de la position d'amers dans l'étape (b1), la technique est connue par l'homme du métier sous le nom « d'odométrie visuelle ». A noter que la position des amers peut être une donnée implicite du procédé d'odométrie. Par exemple, dans un cas de filtrage, la position de ces amers n'est pas toujours incluse dans l'état. A la place, elles peuvent être triangulées et instantanément marginalisées lorsque les amers se sont plus visibles.

Dans les deux cas, l'étape (b1) comprend la construction d'une représentation mathématique de l'environnement possédant les informations nécessaires à la relocalisation de l'objet 1 évoluant dans le volume de l'environnement cartographié, ou du moins muni d'amers.

Cette représentation peut contenir des informations issues des moyens d'acquisition optique 26 (description d'amers visuels) ou issues des moyens de mesure magnétique 20 (carte du champ magnétique et de son gradient), en particulier selon quelle est la donnée par défaut.

A noter qu'il est possible de mettre en plus des amers visuels des informations sur le champ magnétique dans la carte.

Un exemple simple pourrait d'associer pour chaque amer l'angle entre la direction du champ mesuré lorsque les amers sont détecté et la ligne de tir vers l'amer. Même si le champ ne donne pas le nord précisément, cela peut faciliter la relocalisation dans une grande carte, puisqu'on n'a plus qu'à associer les amers que l'on voit actuellement avec les amers de la carte qui ont été vus à un moment ou le champ étaient à peu près aligné avec le champ mesuré actuellement.

Un mode de réalisation préféré du processus de construction d'éléments de cartographie de l'étape (b1) peut être décrit en trois sous-étapes pouvant le cas échéant être exécutées simultanément :
(i) La réception des données inertielle, magnétique et/ou de vision ;
(ii) La construction grossière mais efficiente des éléments de cartographie, préférentiellement mise en œuvre uniquement avec les données magnétique et inertielle, de sorte à réduire le nombre d'image à enregistrer (les images servent principalement à la reconstruction et sont moins importante pour la localisation grossière) ;
(iii) L'affinage des éléments de cartographie afin de corriger les dérives éventuelles de l'étape ii (potentiellement exécuté a posteriori), en particulier avec la donnée de vision.

On voit donc par exemple que tant que la donnée magnétique est fiable et sélectionnée on peut rester sur l'étape ii, et mettre en œuvre l'étape iii si cette donnée est évaluée non fiable et non-sélectionnée.

Les éléments de cartographie contiennent nécessairement des informations de positionnement 3D des amers visuels : ces informations peuvent être issues d'une méthode de type sonar optique (voir la demande WO 2011147947) ou bien issues des méthodes traditionnelles de « Structure From Motion » (SfM), ou « Bundle Adjustement » (BA), optimisation non linéaire itérative sur toute les données trouvant la position 3D des points expliquant au mieux toutes les mesures. Ces méthodes de SfM existent dans l'état de l'art dans des versions incorporant ou non des données inertielles. A noter que tout ou partie des éléments de cartographie peuvent tout aussi bien être connue à priori (en particulier pour initialiser le procédé).

En pratique l'exactitude et l'intégrité de ces éléments de cartographie est primordiale pour la phase de localisation. Et des méthodes de SfM sont généralement nécessaires pour obtenir le niveau final de précision et d'intégrité requises pour l'application. Cependant, ces méthodes sont des méthodes lourdes, et dont le temps de calcul augmente bien plus que linéairement avec la taille de la cartographie.

La base de ces méthodes de SfM étant une optimisation non linéaire, la qualité de l'initialisation des variables de positions des amers et des caméras les ayants observé pendant la phase de cartographie est primordiale pour une convergence vers le bon minimum local et une convergence rapide.

On voit que le présent procédé combinant astucieusement l'utilisation des données inertielle, magnétique et de vision permet alors :
- de réduire sensiblement la puissance de calcul nécessaire à la construction des variables de position des amers initialisés comparé à la méthode utilisé aujourd'hui, parmi lesquels les méthodes de filtrage VINS évoquée avant. Ces puissances de calculs moindres peuvent découler par exemple du fait qu'il est possible de découpler la partie localisation et triangulation ou bien du fait que l'apriori de localisation sur la base des données magnétique et inertielle permet de réduire la recherche de point d'intérêt sur une partie de l'image.
- D'aider l'initialisation des variables (étape ii) au plus proche de la solution finale dans les cas où la vision est ambiguë (mur plan, endroit sombre), Cela permet une convergence plus rapide des algorithmes de SfM.
- De rendre plus robuste l'initialisation des variables du problème de SfM vis-à-vis du type de mouvement réalisé lors du recueil de données. Cela permet une convergence dans le bon minimum local du problème de SfM même si les mouvements réalisés par l'utilisateur, a priori non formé, ne sont pas optimum pour la reconstruction de la cartographie. (essentiel en pratique, les dispositifs de l'état de l'art pour la reconstruction 3D conseillent d'éviter les mouvements de rotation pure, qui conditionnent mal le problème d'optimisation, l'ajout de la donnée magnétique permet d'éviter que ces problèmes de conditionnement polluent la trajectoire lorsque le mouvement fait par l'utilisateur est dégénéré)

### Calibration

De façon préférée, l'étape (a) comprend la calibration préalable de l'un parmi les moyens de mesure inertielle 24, les moyens de mesure magnétique 20 et les moyens d'acquisition optique 26, avec les données acquises par les deux autres. De façon préférée on calibre soit les moyens d'acquisition optique 26 avec la donnée inertielle et la donnée magnétique, soit les moyens de mesure magnétique 20 avec la donnée inertielle et la donnée de vision.

En effet, dans la mesure où l'on a potentiellement une redondance des informations portées par la donnée inertielle, la donnée magnétique et la donnée de vision, lorsqu'elles sont considérées toutes les trois il est possible de corriger des paramètres liés aux capteurs (biais ou facteurs d'échelle des moyens de mesure magnétique 20, distance entre axe optique des moyens d'acquisition optique 26 et moyens des mesure 20, 24, etc.) et donc d'améliorer l'estimation du mouvement *in fine.*

### Equipements et système

Selon un deuxième aspect, l'invention concerne en particulier les équipements 2, 3, 4 pour la mise en œuvre de l'un ou l'autre des modes de réalisation du procédé.

Comme expliqué précédemment, selon un premier mode de réalisation l'équipement est un boitier 2 autonome comprenant les moyens de mesure magnétique 20 et/ou les moyens de mesure inertielle 24 (préférentiellement les moyens de mesure magnétique 20 et les moyens de mesure inertielle 24) et les moyens de traitement de données 21 configurés pour la mise en œuvre des étapes du procédé.

Le boitier 2 comprend en outre des moyens d'attache 23 du boitier 2, et le cas échéant, des moyens de stockage de données 22 (pour le stockage par exemple des mouvements estimés) et/ou des moyens de communication 25 pour l'exportation des résultats.

Soit le boitier 2 comprend les moyens d'acquisition optique 26 (s'ils observent l'environnement), soit ceux-ci sont distincts et disposés de façon fixe et communiquent avec le boitier 2. Dans ce mode où le boitier 2 contient l'intelligence, on est préférentiellement dans le cas où le boitier 2 contient également les moyens d'acquisition d'optique 26 (cas où l'objet 1 est par exemple un drone)

Selon un deuxième mode de réalisation, l'équipement est un terminal mobile 3 ou un serveur 4, adapté pour communiquer avec les moyens de mesure magnétique 20 et les moyens de mesure inertielle 24, et les moyens d'acquisition optique 26.

Typiquement, les moyens de mesure magnétique 20 et les moyens de mesure inertielle 24 sont disposés dans un boitier 2, et les moyens d'acquisition optique 26 sont disposés de manière fixe dans l'environnement, mais on peut avoir les trois moyens 20, 24, 26 dans un même boitier 2, ou deux voire trois boitiers distincts.

En d'autres termes, le terminal 3 ou le serveur 4 comprend les moyens de traitement 31 ou 41 configurés pour la mise en œuvre des étapes du procédé. Chaque boitier 2 peut tout de même comprendre des moyens de traitement de données 21 pour le contrôle des moyens 20, 24, 26 et la transmission (via des moyens de communication 25) des données mesurées aux moyens de traitement de données 31, 41.

Il est à noter que les moyens 21, 31, 41 peuvent le cas échéant se partager des étapes du procédé.

L'invention concerne dans ce cas également le système comprenant l'équipement 3, 4 selon ce mode de réalisation et le ou les boitiers 2 « satellites » en connexion

Dans tous les cas, les moyens de traitement de données 21, 31, 41 de l'équipement 2, 3, 4 « principal » sont configurés pour mettre en œuvre :
- Un module de réception :
   ∘ d'au moins une composante d'une accélération et/ou d'une vitesse angulaire de l'objet 1, dite donnée inertielle, acquise par des moyens de mesure inertielle 24 solidaires dudit objet 1 ;
   ∘ d'au moins une composante du champ magnétique et/ou d'une dérivée i-ième du champ magnétique, dite donnée magnétique, par des moyens de mesure magnétique 20 solidaires dudit objet 1 ;
   ∘ d'images consécutives de l'environnement Σ ou de l'objet 1, dites donnée de vision, par des moyens d'acquisition optique 26 respectivement solidaires dudit objet 1 ou de l'environnement Σ ;
- Un module d'estimation d'au moins une composante du mouvement dudit objet 1 en utilisant la donnée inertielle, ainsi que la donnée magnétique et/ou la donnée de vision.

### Produit programme d'ordinateur

Selon un troisième et un quatrième aspects, l'invention concerne un produit programme d'ordinateur comprenant des instructions de code pour l'exécution (sur les moyens de traitement 21, 31, 41) d'un procédé d'estimation du mouvement d'un objet 1 évoluant dans un environnement Σ et un champ magnétique ambiant selon le premier aspect de l'invention, ainsi que des moyens de stockage lisibles par un équipement informatique (par exemple des moyens de stockage de données 22) sur lequel on trouve ce produit programme d'ordinateur.

## Revendications

1. Procédé d'estimation du mouvement d'un objet (1) évoluant dans un environnement (Σ) et un champ magnétique ambiant, le procédé comprenant des étapes de :
(a) Acquisition :
∘ par des moyens de mesure inertielle (24) solidaires dudit objet (1), d'au moins une composante d'une accélération et/ou d'une vitesse angulaire de l'objet (1), dite donnée inertielle ;
∘ par des moyens de mesure magnétique (20) solidaires dudit objet (1), d'au moins une composante du champ magnétique et/ou d'une dérivée i-ième du champ magnétique, au niveau des moyens de mesure magnétique (20), dite donnée magnétique ;
o par des moyens d'acquisition optique (26) solidaires dudit objet (1), d'images consécutives de l'environnement (Σ), dites donnée de vision ;
évaluation de la validité de la donnée magnétique et/ou de la donnée de vision, et sélection de la donnée magnétique et/ou de la donnée de vision en fonction du résultat de ladite évaluation de validité ;
l'une de la donnée magnétique et de la donnée de vision étant une donnée par défaut et l'autre une donnée de recalage, l'évaluation de la validité étant mise en œuvre pour la donnée par défaut, et la donnée sélectionnée étant :
- la donnée par défaut si la donnée par défaut est évaluée valide,
- la donnée de recalage si la donnée par défaut n'est pas évaluée valide ;
(b) Estimation par les moyens de traitement de données (21, 31, 41) d'au moins une composante du mouvement dudit objet (1) en utilisant la donnée inertielle, ainsi que la ou les données sélectionnées parmi la donnée magnétique et la donnée de vision.

2. Procédé d'estimation du mouvement d'un objet (1) évoluant dans un environnement (Σ) et un champ magnétique ambiant, le procédé comprenant des étapes de :
(a) Acquisition :
∘ par des moyens de mesure inertielle (24) solidaires dudit objet (1), d'au moins une composante d'une accélération et/ou d'une vitesse angulaire de l'objet (1), dite donnée inertielle ;
∘ par des moyens de mesure magnétique (20) solidaires dudit objet (1), d'au moins une composante du champ magnétique et/ou d'une dérivée i-ième du champ magnétique, au niveau des moyens de mesure magnétique (20), dite donnée magnétique ;
o par des moyens d'acquisition optique (26) solidaires de l'environnement (Σ), d'images consécutives dudit objet (1), dites donnée de vision ;
évaluation de la validité de la donnée magnétique et/ou de la donnée de vision, et sélection de la donnée magnétique et/ou de la donnée de vision en fonction du résultat de ladite évaluation de validité ;
l'une de la donnée magnétique et de la donnée de vision étant une donnée par défaut et l'autre une donnée de recalage, l'évaluation de la validité étant mise en œuvre pour la donnée par défaut, et la donnée sélectionnée étant :
- la donnée par défaut si la donnée par défaut est évaluée valide,
- la donnée de recalage si la donnée par défaut n'est pas évaluée valide ;
(b) Estimation par les moyens de traitement de données (21, 31, 41) d'au moins une composante du mouvement dudit objet (1) en utilisant la donnée inertielle, ainsi que la ou les données sélectionnées parmi la donnée magnétique et la donnée de vision.

3. Procédé selon l'une des revendications 1 et 2, dans lequel l'évaluation de la validité de la donnée magnétique et/ou de la donnée de vision comprend l'évaluation d'une incertitude sur l'estimation du mouvement.

4. Procédé selon l'une des revendications 1 à 3, dans lequel l'évaluation de la validité de la donnée magnétique comprend l'évaluation de la stationnarité du champ magnétique ambiant, ou l'évaluation de la non-uniformité du gradient.

5. Procédé selon l'une des revendication 1 à 4, dans lequel l'évaluation de la validité de la donnée de vision comprend l'évaluation du nombre de points d'intérêt, l'évaluation de l'intensité lumineuse, l'évaluation d'un indicateur du contraste de l'image, ou l'évaluation de la réussite de la détection de l'objet dans l'image dans le cas où les moyens d'acquisition optiques (26) sont solidaires de l'environnement (Σ).

6. Procédé selon l'une des revendications 1 à 5, dans lequel l'étape (b) comprend de façon préférée une première sous-étape (b1) de construction d'éléments de cartographie de l'environnement en utilisant la donnée inertielle ainsi que la donnée magnétique et/ou la donnée de vision, et une deuxième sous-étape (b2) d'estimation de l'au moins une composante du mouvement de l'objet (1) à partir desdits éléments de cartographie.

7. Procédé selon la revendication 6, dans lequel la première sous-étape (b1) de construction d'éléments de cartographie de l'environnement en utilisant la donnée inertielle ainsi que la donnée magnétique et/ou la donnée de vision, comprend une première construction grossière d'éléments de cartographie de l'environnement en utilisant la donnée inertielle ainsi que la donnée magnétique, puis l'affinage des éléments de cartographie de l'environnement en utilisant la donnée de vision.

8. Procédé selon l'une des revendications 1 à 7, dans lequel l'étape (a) comprend la calibration préalable de l'un parmi les moyens de mesure inertielle 24, les moyens de mesure magnétique 20 et les moyens d'acquisition optique 26, avec les données acquises par les deux autres.

9. Equipement (2, 3, 4) d'estimation du mouvement d'un objet (1) évoluant dans un environnement (Σ) et un champ magnétique ambiant, comprenant des moyens de traitement de données (21, 31, 41) configurés pour mettre en œuvre :
- Un module de réception :
o d'au moins une composante d'une accélération et/ou d'une vitesse angulaire de l'objet (1), dite donnée inertielle, acquise par des moyens de mesure inertielle (24) solidaires dudit objet (1) ;
o d'au moins une composante du champ magnétique et/ou d'une dérivée i-ième du champ magnétique, dite donnée magnétique, par des moyens de mesure magnétique (20) solidaires dudit objet (1) ;
o d'images consécutives de l'environnement (Σ) ou de l'objet (1), dites donnée de vision, par des moyens d'acquisition optique (26) respectivement solidaires dudit objet (1) ou de l'environnement (Σ) ;
d'évaluation de la validité de la donnée magnétique et/ou de la donnée de vision, et de sélection de la donnée magnétique et/ou de la donnée de vision en fonction du résultat de ladite évaluation de validité ;
l'une de la donnée magnétique et de la donnée de vision est une donnée par défaut et l'autre une donnée de recalage, l'évaluation de la validité étant mise en œuvre pour la donnée par défaut, et la donnée sélectionnée étant :
- la donnée par défaut si la donnée par défaut est évaluée valide,
- la donnée de recalage si la donnée par défaut n'est pas évaluée valide ;
- Un module d'estimation d'au moins une composante du mouvement dudit objet (1) en utilisant la donnée inertielle, ainsi que la ou les données sélectionnées parmi la donnée magnétique et la donnée de vision.

10. Equipement selon la revendication 9, étant un boitier (2) comprenant les moyens de mesure magnétique (20) et/ou les moyens de mesure inertielle (24) et/ou les moyens d'acquisition optique (26).

11. Equipement selon la revendication 10, étant un terminal mobile (3) ou un serveur (4), adapté pour communiquer avec les moyens de mesure magnétique (20), les moyens de mesure inertielle (24) et les moyens d'acquisition optique (26).

12. Système comprenant l'équipement (3, 4) selon la revendication 11 et les moyens de mesure magnétique (20), les moyens de mesure inertielle (24) et les moyens d'acquisition optique (26) en connexion.

13. Produit programme d'ordinateur comprenant des instructions de code pour l'exécution d'un procédé d d'estimation du mouvement d'un objet (1) évoluant dans un environnement (Σ) et un champ magnétique ambiant selon l'une des revendications 1 à 8, lorsque ledit programme est exécuté sur un ordinateur.

14. Moyen de stockage lisible par un équipement informatique sur lequel un produit programme d'ordinateur comprend des instructions de code pour l'exécution d'un procédé d'estimation du mouvement d'un objet (1) évoluant dans un environnement (Σ) et un champ magnétique ambiant selon l'une des revendications 1 à 8.

## Patentansprüche

1. Verfahren zur Schätzung der Bewegung eines Objekts (1), das sich in einer Umgebung (Σ) und einem umgebenden Magnetfeld bewegt, wobei das Verfahren die Schritte umfasst:
(a) Erfassen:
o durch Trägheitsmessmittel (24), die mit dem Objekt (1) fest verbunden sind, mindestens einer Komponente einer Beschleunigung und/oder einer Winkelgeschwindigkeit des Objekts (1), bezeichnet als Trägheitsangabe;
o durch Magnetmessmittel (20), die mit dem Objekt (1) fest verbunden sind, mindestens einer Komponente des Magnetfelds und/oder einer i-ten Ableitung des Magnetfelds im Bereich der Magnetmessmittel (20), bezeichnet als Magnetangabe;
o durch optische Erfassungsmittel (26), die mit dem Objekt (1) fest verbunden sind, aufeinanderfolgender Bilder der Umgebung (Σ), bezeichnet als Sichtanagabe;
Bewertung der Gültigkeit der Magnetangabe und/oder der Sichtangabe, und
Auswahl der Magnetangabe und/oder der Sichtangabe in Abhängigkeit vom Ergebnis der Gültigkeitsbewertung;
wobei eine von der Magnetangabe und der Sichtangabe eine Standardangabe und die andere eine Neukalibrierungsangabe ist, wobei die Gültigkeitsbewertung für die Standardangabe durchgeführt wird, und wobei die ausgewählte Angabe ist:
- die Standardangabe, wenn die Standardangabe als gültig bewertet wird,
- die Neukalibrierungsangabe, wenn die Standardangabe nicht als gültig bewertet wird,
(b) Schätzen mindestens einer Komponente der Bewegung des Objekts (1) durch die Datenverarbeitungsmittel (21, 31, 41) unter Verwendung der Trägheitsangabe sowie der aus der Magnetangabe und der Sichtangabe ausgewählten Angabe oder Angaben.

2. Verfahren zur Schätzung der Bewegung eines Objekts (1), das sich in einer Umgebung (Σ) und einem umgebenden Magnetfeld bewegt, wobei das Verfahren die Schritte umfasst:
(a) Erfassen:
o durch Trägheitsmessmittel (24), die mit dem Objekt (1) fest verbunden sind, mindestens einer Komponente einer Beschleunigung und/oder einer Winkelgeschwindigkeit des Objekts (1), bezeichnet als Trägheitsangabe;
o durch Magnetmessmittel (20), die mit dem Objekt (1) fest verbunden sind, mindestens einer Komponente des Magnetfelds und/oder einer i-ten Ableitung des Magnetfelds im Bereich der Magnetmessmittel (20), bezeichnet als Magnetangabe;
o durch optische Erfassungsmittel (26), die mit Umgebung (Σ) fest verbunden sind, aufeinanderfolgender Bilder des Objekts (1), bezeichnet als Sichtanagabe;
Bewertung der Gültigkeit der Magnetangabe und/oder der Sichtangabe, und
Auswahl der Magnetangabe und/oder der Sichtangabe in Abhängigkeit vom Ergebnis der Gültigkeitsbewertung;
wobei eine von der Magnetangabe und der Sichtangabe eine Standardangabe und die andere eine Neukalibrierungsangabe ist, wobei die Gültigkeitsbewertung für die Standardangabe durchgeführt wird, und wobei die ausgewählte Angabe ist:
- die Standardangabe, wenn die Standardangabe als gültig bewertet wird,
- die Neukalibrierungsangabe, wenn die Standardangabe nicht als gültig bewertet wird,
(b) Schätzen mindestens einer Komponente der Bewegung des Objekts (1) durch die Datenverarbeitungsmittel (21, 31, 41) unter Verwendung der Trägheitsangabe sowie der aus der Magnetangabe und der Sichtangabe ausgewählten Angabe oder Angaben.

3. Verfahren nach einem der Ansprüche 1 und 2, wobei die Bewertung der Gültigkeit der Magnetangabe und/oder der Sichtangabe die Bewertung einer Unsicherheit bei der Schätzung der Bewegung umfasst.

4. Verfahren nach einem der Ansprüche 1 bis 3, wobei die Bewertung der Gültigkeit der Magnetangabe die Bewertung der Stationarität des umgebenden Magnetfelds oder die Bewertung der Nicht-Uniformität des Gradienten umfasst.

5. Verfahren nach einem der Ansprüche 1 bis 4, wobei die Bewertung der Gültigkeit der Sichtangabe die Bewertung der Anzahl der Punkte von Interesse, die Bewertung der Lichtstärke, die Bewertung eines Bildkontrastindikators oder, in dem Fall in dem die optischen Erfassungsmittel (26) fest mit der Umgebung (Σ) verbunden sind, die Bewertung des Erfolgs der Erkennung des Objekts im Bild umfasst.

6. Verfahren nach einem der Ansprüche 1 bis 5, wobei Schritt (b) bevorzugt einen ersten Unterschritt (b1) des Erstellens von Mapping-Elementen der Umgebung unter Verwendung der Trägheitsangabe sowie der Magnetangabe und/oder der Sichtangabe und einen zweiten Unterschritt (b2) des Schätzens der mindestens einen Komponente der Bewegung des Objekts (1) anhand der Mapping-Elemente umfasst.

7. Verfahren nach Anspruch 6, wobei der erste Unterschritt (b1) der Konstruktion von Mapping-Elementen der Umgebung unter Verwendung der Trägheitsangabe sowie der Magnetangabe und/oder der Sichtangabe eine erste grobe Konstruktion von Mapping-Elementen der Umgebung unter Verwendung der Trägheitsangabe sowie der Magnetangabe, dann die Verfeinerung der Mapping-Elemente der Umgebung unter Verwendung der Sichtangabe umfasst.

8. Verfahren nach einem der Ansprüche 1 bis 7, wobei Schritt (a) die vorherige Kalibrierung von einem von den Trägheitsmessmitteln 24, den Magnetmessmitteln 20 und den optischen Erfassungsmitteln 26 mit den von den beiden anderen erfassten Angaben umfasst.

9. Ausrüstung (2, 3, 4) zur Schätzung der Bewegung eines Objekts (1), das sich in einer Umgebung (Σ) und einem umgebenden Magnetfeld bewegt, umfassend Datenverarbeitungsmittel (21, 31, 41), die ausgelegt sind, um umzusetzen:
- ein Modul zum Empfangen:
o mindestens einer durch Trägheitsmessmittel (24), die mit dem Objekt (1) fest verbunden sind, erfassten Komponente einer Beschleunigung und/oder einer Winkelgeschwindigkeit des Objekts (1), bezeichnet als Trägheitsangabe,
o mindestens einer durch Magnetmessmittel (20), die mit dem Objekt (1) fest verbunden sind, erfassten Komponente des Magnetfelds und/oder einer i-ten Ableitung des Magnetfelds, bezeichnet als Magnetangabe;
o durch optische Erfassungsmittel (26), die jeweils mit dem Objekt (1) oder der Umgebung (Σ) fest verbunden sind, erfasster aufeinanderfolgender Bilder der Umgebung (Σ) oder des Objekts (1), bezeichnet als Sichtangabe;
zum Bewerten der Gültigkeit der Magnetangabe und/oder der Sichtangabe, und
zum Auswählen der Magnetangabe und/oder der Sichtangabe in Abhängigkeit vom Ergebnis der Gültigkeitsbewertung;
wobei eine von der Magnetangabe und der Sichtangabe eine Standardangabe und die andere eine Neukalibrierungsangabe ist, wobei die Gültigkeitsbewertung für die Standardangabe durchgeführt wird, und wobei die ausgewählte Angabe ist:
- die Standardangabe, wenn die Standardangabe als gültig bewertet wird,
- die Neukalibrierungsangabe, wenn die Standardangabe nicht als gültig bewertet wird,
- ein Modul zum Schätzen mindestens einer Komponente der Bewegung des Objekts (1) unter Verwendung der Trägheitsangabe sowie der aus der Magnetangabe und der Sichtangabe ausgewählten Angabe oder Angaben.

10. Ausrüstung nach Anspruch 9, die ein Gehäuse (2) ist, das die Magnetmessmittel (20) und/oder die Trägheitsmessmittel (24) und/oder die optischen Erfassungsmittel (26) umfasst.

11. Ausrüstung nach Anspruch 10, das ein mobiles Endgerät (3) oder ein Server (4) ist, das/der zur Kommunikation mit den Magnetmessmitteln (20), den Trägheitsmessmitteln (24) und den optischen Erfassungsmitteln (26) geeignet ist.

12. System, das die Ausrüstung (3, 4) nach Anspruch 11 und die Magnetmessmittel (20), die Trägheitsmessmittel (24) und die optischen Erfassungsmittel (26) in Verbindung umfasst.

13. Rechnerprogrammprodukt, umfassend Codeanweisungen zur Ausführung eines Verfahrens zur Schätzung der Bewegung eines Objekts (1), das sich in einer Umgebung (Σ) und einem umgebenden Magnetfeld bewegt, nach einem der Ansprüche 1 bis 8, wenn das Programm auf einem Rechner ausgeführt wird.

14. Von einer IT-Ausrüstung lesbares Speichermedium, auf dem ein Rechnerprogrammprodukt Codeanweisungen zur Ausführung eines Verfahrens zur Schätzung der Bewegung eines Objekts (1), das sich in einer Umgebung (Σ) und einem umgebenden Magnetfeld bewegt, nach einem der Ansprüche 1 bis 8 umfasst.

## Claims

1. Method for estimating the movement of an object (1) moving in an environment (Σ) and an ambient magnetic field, the method comprising the steps of:
(a) Acquisition:
∘ by inertial measurement means (24) fixed with reference to said object (1), of at least one component of an acceleration and/or an angular velocity of the object (1), designated inertial datum;
∘ by magnetic measurement means (20) fixed with reference to said object (1), of at least one component of the magnetic field and/or an i-th derivative of the magnetic field, at the magnetic measurement means (20), designated magnetic datum;
∘ by optical acquisition means (26) fixed with reference to said object (1), of consecutive images of the environment (Σ), designated vision datum;
evaluation of the validity of the magnetic datum and/or the vision datum, and selection of the magnetic datum and/or the vision datum as a function of the result of said validity evaluation;
one of the magnetic datum and vision datum being a default datum and the other a resetting datum, the evaluation of the validity being implemented for the default datum, and the selected datum being:
o the default datum if the default datum is evaluated valid,
o the resetting datum if the default datum is not evaluated valid;
(b) Estimation by the data processing means (21, 31, 41) of at least one component of the movement of said object (1) using the inertial datum, as well as the datum or data selected from among the magnetic datum and the vision datum.

2. Method for estimating the movement of an object (1) moving in an environment (Σ) and an ambient magnetic field, the method comprising the steps of:
(a) Acquisition:
∘ by inertial measurement means (24) fixed with reference to said object (1), of at least one component of an acceleration and/or an angular velocity of the object (1), designated inertial datum;
∘ by magnetic measurement means (20) fixed with reference to said object (1), of at least one component of the magnetic field and/or an i-th derivative of the magnetic field, at the magnetic measurement means (20), designated magnetic datum;
o by optical acquisition means (26) fixed with reference to the environment (Σ), of consecutive images of said object (1), designated vision datum;
evaluation of the validity of the magnetic datum and/or the vision datum, and selection of the magnetic datum and/or the vision datum as a function of the result of said validity evaluation;
one of the magnetic datum and vision datum being a default datum and the other a resetting datum, the evaluation of the validity being implemented for the default datum, and the selected datum being:
o the default datum if the default datum is evaluated valid,
o the resetting datum if the default datum is not evaluated valid;
(b) Estimation by the data processing means (21, 31, 41) of at least one component of the movement of said object (1) using the inertial datum, as well as the datum or the data selected from among the magnetic datum and the vision datum.

3. Method according to one of claims 1 and 2, in which the evaluation of the validity of the magnetic datum and/or the vision datum includes the evaluation of an uncertainty on the estimation of the movement.

4. Method according to one of claims 1 to 3, in which the evaluation of the validity of the magnetic datum includes the evaluation of the stationarity of the ambient magnetic field, or the evaluation of the non-uniformity of the gradient.

5. Method according to one of claims 1 to 4, in which the evaluation of the validity of the vision datum includes the evaluation of the number of points of interest, the evaluation of the light intensity, the evaluation of an indicator of the image contrast, or the evaluation of the success of the detection of the object in the image in the case where the optical acquisition means (26) are fixed with reference to the environment (Σ).

6. Method according to one of claims 1 to 5, in which step (b) includes in a preferred manner a first sub-step (b1) of constructing elements for mapping the environment using the inertial datum as well as the magnetic datum and/or the vision datum, and a second sub-step (b2) of estimating the at least one component of the movement of the object (1) from said mapping elements.

7. Method according to claim 6, in which the first sub-step (b1) of constructing elements for mapping the environment using the inertial datum as well as the magnetic datum and/or the vision datum includes a first rough construction of elements for mapping the environment using the inertial datum as well as the magnetic datum, then refining the elements for mapping the environment using the vision datum.

8. Method according to one of claims 1 to 7, in which step (a) includes the prior calibration of one among the inertial measurement means 24, the magnetic measurement means 20 and the optical acquisition means 26, with the data acquired by the two others.

9. Equipment (2, 3, 4) for estimating the movement of an object (1) moving in an environment (Σ) and an ambient magnetic field, comprising data processing means (21, 31, 41) configured to implement:
- A module for receiving:
o at least one component of an acceleration and/or an angular velocity of the object (1), designated inertial datum, acquired by inertial measurement means (24) fixed with respect to said object (1);
o at least one component of the magnetic field and/or an i-th derivative of the magnetic field, designated magnetic datum, by magnetic measurement means (20) fixed with respect to said object (1);
o consecutive images of the environment (Σ) or the object (1), designated vision datum, by optical acquisition means (26) respectively fixed with respect to said object (1) or the environment (Σ);
of evaluation of the validity of the magnetic datum and/or the vision datum, and selection of the magnetic datum and/or vision datum as a function of the result of said validity evaluation;
one of the magnetic datum and vision datum being a default datum and the other a resetting datum, the evaluation of the validity being implemented for the default datum, and the selected datum being:
o the default datum if the default datum is evaluated valid,
o the resetting datum if the default datum is not evaluated valid;
- A module for estimating at least one component of the movement of said object (1) using the inertial datum, as well as the datum or data selected from among the magnetic datum and the vision datum.

10. Equipment according to claim 9, being a case (2) including the magnetic measurement means (20) and/or the inertial measurement means (24) and/or the optical acquisition means (26).

11. Equipment according to claim 10, being a mobile terminal (3) or a server (4), suited for communicating with the magnetic measurement means (20), the inertial measurement means (24) and the optical acquisition means (26).

12. System including the equipment (3, 4) according to claim 11 and the magnetic measurement means (20), the inertial measurement means (24) and the optical acquisition means (26) in connection.

13. Computer programme product including code instructions for the execution of a method for estimating the movement of an object (1) moving in an environment (Σ) and an ambient magnetic field according to one of claims 1 to 8, when said programme is executed on a computer.

14. Storage means readable by a computer equipment on which a computer programme product includes code instructions for the execution of a method for estimating the movement of an object (1) moving in an environment (Σ) and an ambient magnetic field according to one of claims 1 to 8.
